Europäisches Patentamt

European Patent Office

Office européen des brevets

(11) Veröffentlichungsnummer: **0 337 566**
**A2**

## EUROPÄISCHE PATENTANMELDUNG

(21) Anmeldenummer: **89200888.9**

(51) Int. Cl.⁴: **G11B 15/60 , G11B 5/48**

(22) Anmeldetag: **10.04.89**

(30) Priorität: **14.04.88 DE 3812362**

(43) Veröffentlichungstag der Anmeldung:
**18.10.89 Patentblatt 89/42**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Kunze, Norbert**
**Mozartstrasse 7**
**D-6332 Ehringshausen(DE)**

(74) Vertreter: **Kupfermann, Fritz-Joachim,**
**Dipl.-Ing.**
**Philips Patentverwaltung GmbH**
**Wendenstrasse 35 Postfach 10 51 49**
**D-2000 Hamburg 1(DE)**

(54) **Magnetbandkassettengerät mit einer Kopfplatte sowie eine Magnetkopfeinheit für dieses Magnetbandkassettengerät.**

(57) Magnetbandkassettengerät (1) mit einer Kopfplatte (10) und einem auf der Kopfplatte (10) angeordneten Magnetkopf (13) mit zylindrischer Bandkontaktfläche (12) und Luftspalt (25). Der Magnetkopf (13) gehört zu einer Kopfeinheit mit einer Kopfhalterung (16), die in Bandtransportrichtung je eine Bandführung (18) vor und hinter dem Magnetkopf (13) aufweist mit zylindrisch gekrümmten Führungsflächen (21) sowie diese einseitig begrenzenden Ausrichtflächen (23) an jeweils einem ihrer axialen Enden. An jede der Führungsflächen (21) schließt ein Steuerrand (24) an, der aufgrund seiner Neigung zur Führungsfläche (21) das Magnetband (11) beim Bandtransport mit einer Bandkante gegen die jeweilige Ausrichtfläche (23) gedrückt hält und wobei die Axiallänge der Führungsfläche (21) kleiner oder gleich der Bandbreite (b) ist. Jeder Steuerrand (24) der Kopfhalterung (16) geht in einem Abstand von der Führungsfläche (21) in eine Ausweichbegrenzerfläche (26) über, wobei von der Übergangsstelle (27) an der Abstand zwischen den gegenüberliegenden Ausrichtflächen (23) und Ausweichbegrenzerflächen (26) derart gleichbleibend größer ist als die Bandbreite (b), daß beim Abheben des Magnetbandes (11′) von den Führungsflächen (21) bei noch bleibender Berührung des Magnetbandes mit der Bandkontaktfläche (12) des Kopfes (13) die Lage des Magnetbandes (11′) in dessen Breiten richtung (22) mit Spiel begrenzt ist, und wobei der genannte Abstand von der Mitte der jeweiligen Ausweichbegrenzerfläche (2) zu deren seitlichen Rändern (26a, 26b) hin zunimmt.

# FIG.1

## Magnetbandkassettengerät mit einer Kopfplatte sowie eine Magnetkopfeinheit für dieses Magnetband-kassettengerät

Die Erfindung bezieht sich auf ein Magnetbandkassettengerät mit einer Kopfplatte und einem auf der Kopfplatte angeordneten Magnetkopf mit zylindrischer Bandkontaktfläche und Luftspalt, wobei der Magnetkopf zu einer Kopfeinheit gehört, mit einer Kopfhalterung, die in Bandtransportrichtung je eine Bandführung vor und hinter dem Magnetkopf aufweist mit zylindrisch gekrümmten Führungsflächen sowie diese einseitig begrenzenden Ausrichtflächen an jeweils einem ihrer axialen Enden, wobei eine gedachte, die Ausrichtflächen verbindende Fläche senkrecht auf einer Ebene durch den Luftspalt steht, wobei an jeder der Führungsflächen an dem anderen axialen Ende ein Steuerrand anschließt, der aufgrund seiner Neigung zur Führungsfläche das Magnetband beim Bandtransport mit einer Bandkante gegen die jeweilige Ausrichtfläche gedrückt hält, und wobei die Axiallänge der Führungsfläche kleiner ist oder gleich der Bandbreite, und eine Magnetkopfeinheit für ein solches Magnetbandkassettengerät.

Ein derartiges Magnetbandkassettengerät mit eine Kopfeinheit und einer zur Kopfeinheit gehörenden Halterung ist aus der EP-PS 0 120 518 (PHN 10.602) bekannt. Der Vorteil der Kopfhalterung bei diesem Magnetbandkassetten gerät besteht darin, daß das Magnetband während seines Transportes über die Bandkontaktfläche des Magnetkopfes immer in der richtigen Azimutlage liegt. Dies ist wichtig bei der Verwendung von vorbespielten Bändern, die auf anderen Geräten vorbespielt wurden. Die Azimutlage des Magnetbandkassettengerätes muß für eine gute Wiedergabe der Azimutlage des Aufnahmegerätes entsprechen. Außerdem kann der Magnetkopf zusammen mit der Halterung bereits beim Hersteller als komplette Einheit angefertigt werden. Bei dem Gerätehersteller sind dann keine Azimuteinstellungen mehr erforderlich.

Bei dieser Bandführung läuft das Band im Spielbetrieb von einer Bandführungsfläche unmittelbar vor dem Magnetkopf über die Bandkontaktfläche des Magnetkopfes zur unmittelbar hinter dem Kopf befindlichen Bandführungsfläche. Dieser Bandverlauf ist leicht gekrümmt und gestrafft. Dies macht das Band steif, so daß die Steuerränder ihre Steuerfunktion ausüben können, indem sie das Magnetband in einer Richtung gegen die Ausrichtflächen drücken. In dem Cue- oder MSS-(Music Sensing System)-Betrieb, der dem Pausensuchen dient, ist der Tonkopf zurückgezogen. Der Andruck des Bandes an die Ausrichtflächen geht verloren.

Aus der US-PS 46 46 186 ist es bekannt, für Spielbetrieb ein der Bandführung dienendes Gabelpaar, bei dem der Zinkenabstand etwa der Bandbreite entspricht, in der Nähe des Tonkopfes und eine für Cue-Betrieb gedachte Bandführungsgabel mit größerem Zinkenabstand weit ab vom Tonkopf einzusetzen. Beim Zurückziehen des Tonkopfes ist nur noch die weit abliegende Bandführungsgabel wirksam. Das Ban verliert seine Führung am Tonkopf Bei höheren Bandgeschwindigkeiten kann dies zie Schwingungen führen, die das Auslesen der Signale aus der Tonspur beeinträchtigen oder sogar zu Beschädigungen der Bandränder führen können.

Es ist Aufgabe der Erfindung, ein Magnetbandkassettengerät und eine Magnetkopfeinheit für ein derartiges Magnetbandkassettengerät der eingangs erwähnten Art derart zu verbessern, daß das Magnetband auch in der Cue-Lage eine Art von Führung vorfindet.

Die gestellte Aufgabe ist erfindungsgemäß dadaurch gelöst, daß jeder Steuerrand der Kopfhalterung in einem Abstand von der Führungsfläche in eine Ausweichbegrenzerfläche übergeht, wobei von der Übergangsstelle an der Abstand zwischen den gegenüberliegenden Ausrichtflächen und Ausweichbegrenzerflächen derart größer als die Bandbreite ist, daß beim Abheben des Magnetbandes von den Führungsflächen bei noch bleibendem Berühren des Magnetbandes mit der Bandkontaktfläche des Kopfes die Lage des Magnetbandes in dessen Breitenrichtung mit Spiel begrenzt ist, und wobei der genannte Abstand von der Mitte der jeweiligen Ausweichbegrenzerfläche zu deren seitlichen Rändern hin zunimmt.

Durch die Einführung von Ausweichbegrenzerflächen ist die Funktion der Steuerränder während des normalen Aufnahme-oder Spielbetriebes nicht beeinträchtigt. Die Ausweichbegrenzerflächen sorgen aber in der Cue-Lage dafür, daß das Magnetband nur in gewissen kleinen Grenzen in der Breitenrichtung seitlich ausweichen kann. Um sicher zu sein, daß diese begrenzte Führung immer richtig arbeitet, ist vorgesehen, daß der gegenseitige Abstand zwischen Ausweichbegrenzerflächen und Ausrichtflächen immer größer ist als die größte Bandbreite. Die Ausweichflächen sind ebenso wie alle übrigen Flächen der Halterung einstückig mit der Halterung zu fertigen. Da die das Band beeinflussenden Flächen in Bandlaufrichtung vor und hinter dem Kopf liegen, wird der Andruckfilz der Kassette in seiner Position und Funktion von der Halterung nicht gestört.

Nach einer weiteren Ausgestaltung dere Erfindung ist vorgesehen, daß die Ausweichbegrenzerflächen zylindrisch gekrümmt sind. Aufgrund der zylindrischen Krümmung haben die Bandränder mit den Ausweichbegrenzerflächen immer nur einen punktförmigen, praktisch niemals flächigen Kontakt. Dies ist wichtig bei veränderter Höhenlage des Bandlaufes vor und hinter der Magnetkopfeinheit. Dies kann seine Ursache in Lauffehlern innerhalb der Kassette haben.

Nach einer weiteren Ausgestaltung der Erfindung ist vorgesehen, daß eine Tangentialfläche zur Ausweichbegrenzerfläche etwa senkrecht zur Bandkontaktfläche verläuft. Damit verläuft die Ausweichbegrenzerfläche etwa parallel zur Ausrichtfläche und ist sichergestellt, daß das Magnetband, auch wenn es sich quer zur Transportrichtung auf der Bandkontaktfläche verschiebt, weiterhin grob geführt ist.

Nach einer weiteren Ausgestaltung der Erfindung ist vorgesehen, daß an die freien Enden der Ausweichbegrenzerflächen gegenüber den Ausrichtflächen divergierende Einfangflächen vorgesehen sind. Beim Vorschieben der Magnetkopfeinheit gegenüber der Magnetbandkassette wird das Magnetband dann immer von der Halterung eingefangen.

Die Erfindung wird anhand der Zeichnung näher erläutert. Es zeigen:

Fig. 1 ein Magentbandkassettengerät mit einer Magnetkopfeinheit und einer Kopfhalterung zur Azimutführung eines Magnetbandes,

Fig. 2 eine schaubildliche Darstellung eines Magnetkopfteiles und eines Teiles einer Magnetkopfhalterung, die an einer nicht dargestellten Kopfplatte eines Magnetbandkassettengerätes angeordnet ist,

Fig. 3 einen Schnitt längs der Linie II-II nach Fig. 1 zur Darstellung von zwei verschiedenen Lagen des Magnetbandes gegenüber den Bandführungsflächen der Halterung.

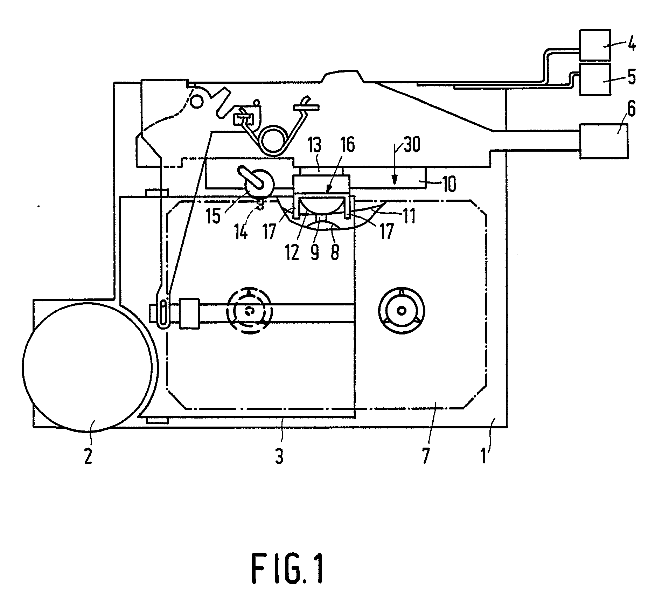

Fig. 1 zeigt ein Magentbandkassettengerät mit einem Gehäuse 1, einem Antriebsmotor 2 und einer Kassettenhaltevorrichtung 3. Zur Betätigung der verschiedenen Betriebsfunktionen des Magnetbandkassettengerätes 1 dienen drei Tasten 4, 5, 6, die innerhalb des Gerätes auf nicht dargestellte Weise geführt sind. In die Kassettenhalterung 3 ist eine Magnetbandkassette 7 eingeschoben, die einen an einer Feder 8 abgestützten Andruckfilz 9 aufweist.

Das Magnetbandkassettengerät hat eine Kopfplatte 10, die in Richtung auf die Magnetbandkassette 7 vor und zurück fahrbar ist. Zwischen einer voll vorgefahrenen Spielstellung und einer ganz zurückgefahrenen Stellung gibt es noch eine Cue-Stellung. In der Zeichnung ist die Spielstellung dargestellt. In Fig. 1 ist zu erkennen, daß der Andruckfilz 9 ein Magnetband 11 gegen eine Bandkontaktfläche 12 eines Magnetkopfes 13 drückt.

Zum Bandtransport dient eine Tonwelle 14, gegen die eine Andruckrolle 15 drückt. Zwischen der Andruckrolle und der Tonwelle wird das Magnetband 11 geführt und transportiert. Der Magnetkopf 13 ist auf der Kopfplatte 10 angeordnet mittels einer Halterung 16. Die Halterung 16 und der Magnetkopf 13 sind fabrikmäßig zu einer Einheit verbunden.

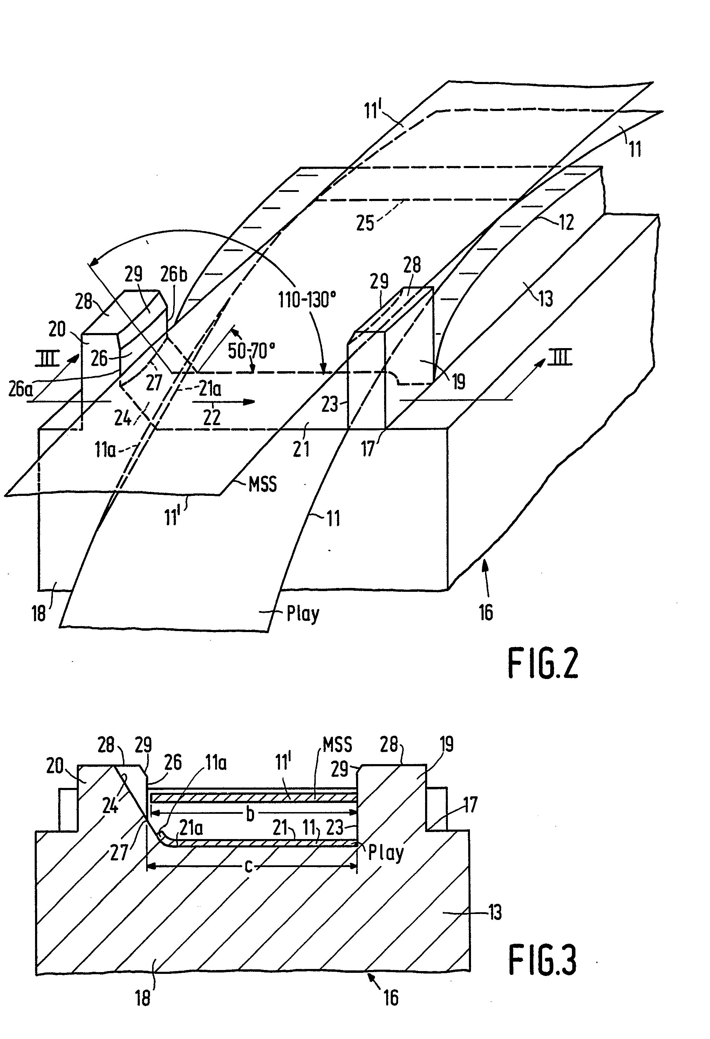

Die Halterung 16 hat seitlich des Magnetkopfes Ansatzteile 17, zwischen denen das Magnetband 11 hinduch läuft. Eines der Ansatzteile 17 ist in Fig. 2 und 3 stark vergrößert dargestellt zusammen mit dem Magnetkopf und dem Magnetband.

Das in Fig. 2 und 3 dargestellte Ansatzteil 17 stellt nur die eine Hälfte der Halterung 16 dar und hat einen Grundkörper 18, von dem seitlich Ansätze 19, 20 aufragen. Der Grundkörper 18 weist eine Führungsfläche 21 auf, die in Breitenrichtung gemäß Pfeil 22 zylindrisch gekrümmt ist. Die Führungsfläche 21 ist gegenüber der Bandkontaktfläche 12 und deren Tangentialebene etwas zurückgesetzt. Hierdurch ist sichergestellt, daß das Magnetband 11 zwischen nicht darstellten Führungsrollen in der Magnet bandkassette und der Bandkontaktfläche 12 einen gekrümmten Verlauf hat, und zwar sowohl über die Bandkontaktfläche 12 hinweg als auch über die Führungsfläche 21 hinweg. Damit wird das Band gestrafft.

Der Ansatz 19 weist angrenzend an die Führungsfläche 21 eine Ausrichtfläche 23 auf. Diese Ausrichtfläche 23 steht etwa senkrecht auf der Tangentialfläche zur Führungsfläche 21. Während die Ausrichtfläche an dem einen Ende der Führungsfläche 21 angeordnet ist, befindet sich am anderen Ende der Führungsfläche 21 ein Steuerrand 24, der wie die Führungsfläche 21 zylindrisch gekrümmt ist. Die Tangentialfläche des Steuerrandes schließt mit der Tangentialfläche der Führungsfläche 21 einen stumpfen Winkel von 110° bis 130° ein. Vorzugsweise beträgt der Winkel etwa 120°. Der Abstand zwischen der Ausrichtfläche 23 und dem Steuerrand 24 im Übergang 21a zu der Führungsfläche 21 ist kleiner als die Bandbreite. Das bedeutet, wie aus Fig. 3 zu ersehen ist, daß das Magnetband 11 mit einem Rand 11a immer ein wenig auf dem Steuerrand 24 aufliegt und an der Ausrichtfläche 23 anliegt. Auf diese Weise wird die Azimutlage des Magnetbandes gegenüber dem Luftspalt 25 genau eingestellt. Nähere Einzelheiten über die Funktionsweise dieser Einstellung sind aus der EP-PS 0 120 518 (PHN 10.602) bekannt. Es wird deshalb zur näheren Erläuterung auf diese Druckschrift verwiesen.

Jeder Steuerrand 24 der Ansätze 20 geht in einem Abstand von der Führungsfläche 21 in eine Ausweichbegrenzerfläche 26 über, die seitliche Ränder 26a, 26b aufweist und zwischen denen die Fläche 26 vorzugsweise eine zylindrische Krümmung aufweist, die in der Flächenmitte den kleinsten Abstand zu der gegenüberliegenden Ausrichtfläche 23 aufweist. An der Übergangsstelle 27 ist der Abstand c zwischen der gegenüberliegenden Ausrichtfläche 23 und der Ausweichbegrenzerfläche 26 größer als die Bandbreite b; der Abstand c bleibt von der Übergangsstelle 27 an zur offenen Seite hin gleich. In Fig. 2 und 3 ist die Spiellage des Bandes mit 11 und die Cue-Lage des Bandes mit 11' bezeichnet. In der Cue-Lage 11' hat das Magnetband zwar noch Kontakt mit dem Luftspalt 25 und der Bandkontaktfläche 12 im Gebiet des Luftspaltes, von den Führungsflächen 21 hat es sich jedoch abgehoben. Diese Cue-Lage dient dazu, bei schnellem Bandlauf die Reibung des Bandes zu verringern, jedoch noch Signale von dem Magnetband abzunehmen. Wie aus Fig. 3 zu ersehen ist, ist die Lage des Magnetbandes 11' in der Cue-Lage in dessen Breitenrichtung 22 mit Spiel begrenzt zwischen der Ausrichtfläche 23 und der Ausweichbegrenzerfläche 26.

An dem freien Ende 28 der Ausweichbegrenzerfläche 26 sind gegenüber der Ausweichbegrenzerfläche 26 divergierende Einfangflächen 29 vorgesehen, damit das Magnatband 11 beim Vorfahren des Magnetkopfes 13 in die am Kopf befestigte Halterung 16 einlaufen kann. Eine gedachte Tangentialfläche zur Ausweichbegrenzerfläche 26 verläuft etwa senkrecht zur Bandkontaktfläche 12. Dies bedeutet, daß die Ausrichtfläche 23 und die Ausweichbegrenzerfläche 26 in Richtung eines Pfeiles 30 nach Fig. 1, d. h. der Kopfbewegungsrichtung, örtlich einen etwa parallelen Verlauf haben.

Die Kopfhalterung mit ihren Einzelteilen ist aus Kunststoff gespritzt und ist dadurch einfach und genau zu fertigen. Vorzugsweise kann die Kopfhalterung gleich mit einer Schnappverbindung versehen sein, mittels der die Kopfhalterung mit Kopf auf die Kopfplatte aufschnappbar ist.

## Ansprüche

1. Magnetbandkassettengerät (1) mit einer Kopfplatte (10) und einem auf der Kopfplatte (10) angeordneten Magnetkopf (13) mit zylindrischer Bandkontaktfläche (12) und Luftspalt, wobei der Magnetkopf (13) zu einer Kopfeinheit gehört, mit einer Kopfhalterung (16), die in Bandtransportrichtung je eine Bandführung (18) vor und hinter dem Magnetkopf (13) aufweist mit zylindrisch gekrümmten Führungsflächen (21) sowie diese einseitig begrenzenden Ausrichtflächen (23) an jeweils einem ihrer axialen Enden, wobei eine gedachte, die Ausrichtflächen (23) verbindende Fläche senkrecht auf einer Ebene durch den Luftspalt steht, wobei an jeder der Führungsflächen (21) an dem anderen axialen Ende ein Steuerrand (24) anschließt, der aufgrund seiner Neigung zur Führungsfläche (21) das Magnetband (11) beim Bandtransport mit einer Bandkante gegen die jeweilige Ausrichtfläche (23) gedrückt hält, und wobei die Axiallänge der Führungsfläche (21) kleiner ist oder gleich der Bandbreite (b), dadurch gekennzeichnet, daß jeder Steuerrand (24) der Kopfhalterung (16) in einem Abstand von der Führungsfläche (21) in eine Ausweichbegrenzerfläche (26) übergeht, wobei von der Übergangsstelle (27) an der Abstand zwischen den gegenüberliegenden Ausrichtflächen (23) und Ausweichbegrenzerflächen (26) derart größer als die Bandbreite (b) ist, daß beim Abheben des Magnetbandes (11) von den Führungsflächen (21) bei noch bleibendem Berühren des Magnetbandes mit der Bandkontaktfläche (12) des Kopfes (13) die Lage des Magnetbandes (11') in dessen Breitenrichtung mit Spiel begrenzt ist, und wobei der genannte Abstand von der Mitte der jeweiligen Ausweichbegrenzerfläche (26) zu deren seitlichen Rändern (26a, 26b) hin zunimmt.

2. Magnetbandkassettengerät nach Anspruch 1, dadurch gekennzeichnet, daß die Ausweichbegrenzerflächen (26) zylindrisch gekrümmt sind.

3. Magnetbandkassettengerät nach Anspruch 2, dadurch gekennzeichnet, daß eine Tangentialfläche zur Ausweichbegrenzerfläche (26) etwa senkrecht zur Bandkontaktfläche (12) verläuft.

4. Magnetbandkassettengerät nach Anspruch 1, dadurch gekennzeichnet, daß an die freien Enden (28) der Ausweichbegrenzerflächen (26) gegenüber den Ausrichtflächen (23) divergierende Einfangflächen (29) vorgesehen sind.

5. Magnetkopfeinheit zum Gebrauch in Einem Magnetbandkassettengerät nach Anspruch 1.

# FIG.1

FIG.2

FIG.3